(19) Europäisches Patentamt / European Patent Office / Office européen des brevets

(11) **EP 3 857 685 B1**

## (12) FASCICULE DE BREVET EUROPÉEN

(45) Date de publication et mention
de la délivrance du brevet:
**05.11.2025 Bulletin 2025/45**

(21) Numéro de dépôt: **19773870.1**

(22) Date de dépôt: **30.09.2019**

(51) Classification Internationale des Brevets (IPC):
*H02K 5/24* *(2006.01)*   *H02K 7/116* *(2006.01)*
*H02K 11/33* *(2016.01)*   *H02K 5/10* *(2006.01)*
*H02K 21/22* *(2006.01)*

(52) Classification Coopérative des Brevets (CPC):
**H02K 11/33; H02K 5/24; H02K 7/116;** H02K 5/10;
H02K 21/225

(86) Numéro de dépôt international:
**PCT/EP2019/076384**

(87) Numéro de publication internationale:
**WO 2020/065088 (02.04.2020 Gazette 2020/14)**

(54) **ACTIONNEUR ÉLECTRIQUE**

ELEKTRISCHER AKTUATOR

ELECTRIC ACTUATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.09.2018 FR 1858987**

(43) Date de publication de la demande:
**04.08.2021 Bulletin 2021/31**

(73) Titulaire: **Sonceboz Mechatronics Boncourt SA
2926 Boncourt (CH)**

(72) Inventeur: **MELLERE, Cédric
2926 BONCOURT (CH)**

(74) Mandataire: **IP Trust
2, rue de Clichy
75009 Paris (FR)**

(56) Documents cités:
**WO-A1-2018/088356    WO-A2-2010/138455
DE-A1- 4 313 782    US-A1- 2018 062 479**

## Description

## DOMAINE TECHNIQUE DE L'INVENTION

L'invention concerne le domaine des actionneurs électriques comprenant l'assemblage, dans un boitier et un couvercle, d'un moteur électrique, d'un circuit imprimé portant les composants électroniques de commande et d'un réducteur mécanique.

## ETAT DE LA TECHNIQUE ANTERIEURE

Il est déjà connu dans l'état de l'art de nombreux actionneurs électriques. Par exemple, les documents WO2018/088356 qui décrit un actionneur qui est pourvu : d'un boîtier qui possède un carter de moteur et un carter d'engrenage ayant chacun une ouverture sur un côté et dans lequel le carter de moteur et le carter d'engrenage sont assemblés l'un à l'autre de telle sorte que les ouvertures respectives se font face ; d'un moteur qui est installé dans le carter de moteur ; d'un engrenage qui est installé dans le carter d'engrenage et qui est agencé de manière à transmettre la rotation du moteur. Le boîtier possède une paroi de séparation qui est disposée entre le moteur et l'engrenage. L'engrenage est soutenu de manière rotative, des deux côtés dans la direction d'arbre de l'engrenage, par le carter d'engrenage et la paroi de séparation.

Selon cette solution, le carter comprend un premier et un second carter moteur ouvert sur un côté, et un carter central disposé entre ces deux carters. Il est Le boîtier prend en sandwich le carter central entre le carter de moteur et le carter d'engrenages.

Cette solution implique de prévoir une double étanchéité, d'une part entre le carter central et le premier carter moteur, et d'autre part entre le carter d'engrenages et le carter central.

La demande de brevet US2018/062479 décrit un actionneur de composant de moteur de véhicule modulaire comprenant un premier module comprenant un moteur, une carte de circuit imprimé et un arbre de moteur. Un deuxième module comprend un train d'engrenages et un arbre de sortie. Le premier module est Couplé au second module dans une relation où l'arbre du moteur s'étend dans le second module et dans une relation de couplage avec le train d'engrenages dans le second module. Les premiers et seconds modules permettent des premières et secondes ouvertures respectives et des cavités intérieures en communication l'une avec l'autre. Les premier et second modules sont couplés ensemble dans une relation où la carte de circuit imprimé est installée entre le moteur dans le premier module et le train d'engrenages dans le second module.

On connaît aussi la demande de brevet DE4313782. Elle concerne un dispositif pour monter des contrôleurs dans un véhicule à moteur. Le dispositif permet de monter plusieurs contrôleurs selon les besoins au même emplacement d'assise sur un mur et d'en extraire de la chaleur afin de maintenir leur température de fonctionnement. Selon l'invention, ce dispositif comprend au moins une base de refroidissement qui est constituée d'un métal à haute conductivité thermique et est conçue de telle sorte qu'elle ferme une découpe en forme de fenêtre dans une paroi qui est destinée au montage du ou des contrôleurs et est en métal ou en plastique. La base de refroidissement est conçue comme un élément plat ayant un emplacement d'assise d'équipement sur lequel au moins une surface, qui émet de la chaleur, d'un contrôleur peut être positionnée, et cette dernière montée, en bon contact thermique. La base de refroidissement peut recouvrir une découpe en forme de fenêtre dans la paroi de montage, de sorte que ladite base de refroidissement s'étend sur la découpe d'un côté ou des deux côtés. Il peut également être moulé sous pression directement dans l'ouverture de la fenêtre et fabriqué en métal hautement conducteur.

On connaît aussi la demande de brevet WO2010/138455 ; elle décrit un actionneur rotatif sans balai qui comprend un boîtier comprenant un boîtier de moteur définissant une cavité pour un ensemble moteur et un couvercle définissant une cavité pour un ensemble d'engrenage. L'ensemble moteur comprend un rotor et un stator comportant une pluralité de bobines. Une pince ayant la forme d'une plaque annulaire est assise contre les bobines pour retenir les bobines sur le stator. Des doigts formés sur la plaque annulaire sont logés dans des fentes respectives définies par des bornes de bobine respectives. Une carte de circuit imprimé est assise dans le boîtier contre un épaulement intérieur du boîtier de moteur. Une plaque est assise dans le boîtier contre un bord périphérique du boîtier de moteur en relation espacée au-dessus de la carte de circuit imprimé.

Ces réalisations, bien que compactes et aptes à produire des couples élevés, manquent de robustesse pour fournir des performances de tenue en vibration et durée de vie suffisantes. En effet, les performances en endurance demandent un alignement, un centrage précis et maitrisé des éléments de guidage du réducteur mécanique ainsi qu'une gestion efficace de l'évacuation de l'énergie thermique produite au niveau des composants électronique et du moteur. Les réalisations revendiquées dans ces documents n'apportent aucune solution pour la maitrise robuste du guidage précis du réducteur (guidage imparfait car uniquement présent d'un seul côté des roues formant ce réducteur, favorisant de préjudiciables porte-à-faux, absence de centrage précis entre le boitier et le couvercle formant les éléments de guidage supérieur et inférieur du réducteur, favorisant des défauts de coaxialité et de parallélisme). Ces réalisations n'apportent également aucune solution pour la dissipation de l'énergie thermique, les composants électroniques présents sur le circuit imprimé n'ayant aucun pont thermique vers l'extérieur pour dissiper l'énergie thermique qu'ils produisent, favorisant de préjudiciables échauffements. Il en résulte des solutions peu robustes mécaniquement et incapables d'adresser des applications à haute température ambiante de fonctionnement et/ou à forte charge de fonctionnement.

Il existe des solutions résolvant les inconvénients cités ci-dessus, comme par exemple décrit dans le document WO2010138455, grâce à l'utilisation d'une plaque intermédiaire située entre le moteur électrique avec son circuit imprimé d'une part et le réducteur mécanique d'autre part.

Cette solution permet de reprendre le guidage des arbres du réducteur mécanique et permet aussi une dissipation thermique améliorée au niveau du circuit imprimé par sa proximité avec celui-ci. Cette solution propose également un circuit de refroidissement liquide qui circule en proximité périphérique du moteur pour une meilleure évacuation de l'énergie thermique.

Cependant, la mise en œuvre de cette plaque intermédiaire n'est pas aisée : d'une part elle présente un appui rigide sur le couvercle mais elle est en appui côté boitier sur le circuit imprimé très peu rigide, et d'autre part elle n'intègre aucun élément de centrage permettant un guidage adéquat des trois éléments : boitier, couvercle et plaque intermédiaire. De plus, le document ci-dessus cité ne donne pas de solution à la situation mécanique hyperstatique conséquente de cet appui bilatéral et de la nécessité de fermer l'actionneur de manière étanche.

## EXPOSE DE L'INVENTION

La présente invention a pour objet une amélioration des solutions actuelles, notamment en proposant une solution industrielle efficace permettant le centrage et le guidage viables des trois éléments cités ci-dessus.

La présente invention a aussi pour objet de donner une solution au montage hyperstatique décrit ci-dessus, favorisant la robustesse du montage de l'actionneur.

La présente invention a aussi pour objet d'améliorer le comportement thermique de l'actionneur, permettant son utilisation dans des environnements portés à haute température (typiquement supérieurs à 150°C).

Plus particulièrement l'invention concerne un actionneur électrique présentant les caractéristiques techniques énoncées dans la revendication 1.

L'actionneur électrique comprend un boitier, un moteur électrique comprenant un stator bobiné et un rotor monté sur un arbre de rotor, un circuit imprimé servant à l'alimentation dudit stator et au pilotage dudit moteur, une plaque intermédiaire, un réducteur mécanique entrainé par ledit rotor et formé de roues dentées montées sur des axes, un couvercle, deux pions de centrage, ledit boitier définissant une première cavité dans laquelle est logé ledit stator, ledit boitier servant au guidage dudit arbre de rotor sur une première extrémité, ledit circuit imprimé étant logé dans ladite première cavité au-dessus dudit stator, ladite plaque intermédiaire étant située au-dessus dudit circuit imprimé, ledit couvercle définissant une seconde cavité munie de moyens de guidage l'une des extrémités desdits axes dudit réducteur mécanique et étant situé au-dessus de ladite plaque intermédiaire, ladite plaque intermédiaire présentant des moyens de guidage de l'autre extrémité dudit arbre de rotor, et servant au guidage des autres extrémités desdits axes dudit réducteur mécanique, caractérisé en ce que dans la première cavité dudit boitier présente un premier couple de trous de centrage recevant lesdits deux pions de centrage, dans ladite plaque intermédiaire présente un deuxième couple de trous de centrage recevant lesdits deux pions de centrage, dans ledit couvercle présente un troisième couple de trous de centrage recevant lesdits deux pions de centrage, ladite plaque intermédiaire est en contact avec ledit boitier et ledit couvercle sur des surfaces d'appui localisées autour des trous de centrage, deux desdits premier, deuxième et troisième couples de trous sont composés d'un centreur cylindrique et d'un centreur dégagé, les centreurs cylindriques et les centreurs dégagés correspondants, l'autre desdits premier, deuxième et troisième couples de trous est composé de deux centreurs cylindriques, ledit boîtier comportant un seul joint d'étanchéité positionné à l'interface entre le boitier et le couvercle.

On entend par « centreur cylindrique » un pion de positionnement qui réalise une liaison pivot glissant avec deux degrés de liberté (translation et rotation selon un axe seulement)

[0018] , On entend par « centreur dégagé » un pion de positionnement qui réalise une liaison linéaire rectiligne, avec quatre degrés de liberté, ou une liaison ponctuelle, avec 5 degrés de liberté.

Ainsi, un actionneur selon l'invention pourra résoudre les problèmes ci-dessus, quel que soit l'élément (couvercle, boitier ou plaque intermédiaire) qui présente les deux centreurs cylindriques.

Préférentiellement, ledit boitier comprend un pourtour de boitier présentant au moins deux premiers perçages de fixation et en ce que ledit couvercle comprend un pourtour de couvercle présentant au moins deux deuxièmes perçages de fixation de manière à ce que la fixation dudit couvercle et dudit boitier soit réalisée par vissage à l'aide desdits premiers et deuxièmes perçages, lesdits pourtours de boitier et de couvercle n'étant pas jointifs lorsque ledit couvercle et ledit boitier sont en appui sur ladite plaque intermédiaire avant le vissage et étant en appui et au moins partiellement jointifs après le vissage, de manière à contraindre et bloquer le mouvement de ladite plaque intermédiaire. Le problème d'hyperstatisme décrit ci-dessus est ainsi tourné à l'avantage de l'actionneur et du maintien de la plaque intermédiaire.

Dans une variante de réalisation, le couvercle forme un corps de vanne.

Préférentiellement, les différentes portées de guidage desdits arbres et axes du train d'engrenages réducteur sont réalisées par le boitier, la plaque intermédiaire et le couvercle, lesdites portées de guidages étant des roulements à billes ou des paliers lisses.

Dans une variante de réalisation, lesdits deux pions de centrage et ladite plaque intermédiaire forment une seule et même pièce, afin de faciliter la réalisation globale et le montage.

Dans une autre variante de réalisation, le boitier est réalisé par surmoulage d'une matière plastique et présente sur un des trous du couple de trous de centrage deux centreurs coaxiaux, l'un cylindrique, l'autre dégagé. Cette configuration permet d'envisager un seul boitier, quel que soit le mode de réalisation choisi pour le montage et l'assemblage de l'actionneur, en jouant sur la longueur du pion de centrage engageant ce trou de centrage.

Dans une autre variante de réalisation, le boitier est réalisé par surmoulage d'une matière plastique et il comprend un connecteur intégré au surmoulage.

Afin de tenir des températures de fonctionnement plus élevées, dans un mode de réalisation particulier, le circuit imprimé présente une première face accueillant des composants électroniques et une deuxième face libre de composants, ladite première face faisant face au moteur électrique et au fond du boitier, ladite deuxième face faisant face à la plaque intermédiaire.

Alors, avantageusement et optionnellement, les première et deuxième faces du circuit imprimé sont recouvertes au moins partiellement avec une pâte thermique étant aussi en contact au moins partiellement avec, respectivement, le boitier et la plaque intermédiaire.

Afin d'améliorer les performances de l'actionneur, dans une autre variante de réalisation, le stator bobiné présente des dents statoriques prolongées tangentiellement par des collecteurs de champ magnétique, au moins une partie desdites dents portent des bobines et sont rapportées sur le stator et lesdites bobines présentent une forme tronconique.

Dans ce cas de réalisation, dans une autre variante de réalisation, chaque dent statorique portant une bobine présente, avec deux dents adjacentes, une forme de W, les flancs extérieurs de la bobine tronconique étant parallèles aux flancs intérieurs desdites dents adjacentes.

Pour optimiser les performances de ce mode de réalisation, si D désigne le nombre de dents statoriques et GAP désigne la distance tangentielle entre les collecteurs de champ entre deux dents adjacentes, on privilégiera la relation :

$$\text{GAP est égal à } 360 / (8xD) \pm 5\%.$$

Toujours dans ce même mode de réalisation, pour optimiser les performances, si E désigne l'épaisseur radiale de l'aimant du rotor, si EP1 désigne l'épaisseur radiale minimale à l'extrémité du collecteur de champ et EP2 désigne l'épaisseur radiale maximale à la naissance du collecteur de champ, on privilégiera la relation :

$$EP2 \geq 0.75xE \text{ et } EP1 < EP2.$$

Enfin, dans un désir de simplification de la machine électrique de l'actionneur et d'amélioration des performances, le rotor comprend un aimant permanent surmoulé partiellement par une matière plastique injectée, ce surmoulage englobant partiellement l'arbre de rotor et formant un plan orthogonal à l'arbre sur lequel est positionné un aimant de capteur. Dans une réalisation alternative, l'aimant surmoulé forme directement un aimant de capteur sans ajout d'un aimant additionnel.

## BREVE DESCRIPTION DES FIGURES

D'autres caractéristiques et avantages de l'invention ressortiront à la lecture qui suit d'exemples de réalisation détaillés, en référence aux figures annexées qui représentent respectivement :

- la figure 1, une vue en perspective éclatée d'un premier actionneur selon un premier mode de réalisation,
- la figure 2, une vue en perspective éclatée du premier actionneur selon un deuxième mode de réalisation,
- la figure 3, une vue en perspective éclatée du premier actionneur selon un troisième mode de réalisation,
- la figure 4, une vue en perspective éclatée d'un deuxième actionneur selon un premier mode de réalisation,
- la figure 5, une vue en perspective éclatée du deuxième actionneur selon un deuxième mode de réalisation,
- la figure 6, une vue en perspective éclatée du deuxième actionneur selon un troisième mode de réalisation,
- la figure 7, une première vue de détail et en coupe du deuxième actionneur selon le deuxième mode de réalisation,
- la figure 8, une deuxième vue de détail et en coupe du deuxième actionneur selon le deuxième mode de réalisation,
- la figure 9, une vue en perspective et en coupe du deuxième actionneur selon le deuxième mode de réalisation,
- la figure 10, une vue en perspective d'ensemble du deuxième actionneur,
- la figure 11, une vue en perspective et en coupe partielle de l'actionneur de la figure 10,
- la figure 12, une vue isolée d'ensemble d'un boitier et d'une plaque intermédiaire du deuxième actionneur,
- la figure 13, une vue en perspective et en coupe partielle de l'ensemble de la figure 12,
- la figure 14, une vue en coupe partielle du deuxième actionneur dans une variante de réalisation,
- la figure 15, une vue en perspective d'ensemble du premier actionneur dans une variante de réalisation,

- la figure 16, une vue en perspective et en coupe partielle de l'actionneur de la figure 15,
- la figure 17, une vue isolée d'ensemble d'un boitier et d'une plaque intermédiaire du premier actionneur dans une variante de réalisation,
- la figure 18, une vue en perspective et en coupe partielle de l'ensemble de la figure 17,
- les figures 19a et 19b, deux vues en coupe partielle selon deux angles de vue différents du premier actionneur dans une variante de réalisation,
- la figure 20, une vue isolée et en coupe d'un moteur électrique du deuxième actionneur,
- la figure 21, une vue isolée d'un stator de moteur électrique intégré au premier ou deuxième actionneur dans une variante de réalisation,
- la figure 22, une vue isolée et en éclaté partiel du stator de la figure 21,
- la figure 23, une vue isolée et en coupe transversale du stator de la figure 21,
- la figure 24, une vue isolée et en coupe longitudinale d'un rotor de moteur électrique dans une variante de réalisation,
- la figure 25, une vue en coupe partielle d'un actionneur selon un mode alternatif de réalisation du réducteur mécanique,
- la figure 26, une vue isolée d'une réalisation alternative d'un rotor de moteur électrique pouvant être utilisé dans un actionneur selon la présente invention,
- les figures 27 et 28, deux vues en coupe partielle présentant des modes de réalisation alternatifs des stators d'un moteur électrique pouvant être utilisés dans un actionneur selon la présente invention,
- la figure 29, une vue en perspective éclatée d'un actionneur selon un mode de réalisation alternatif,
- la figure 30, une vue en coupe partielle de l'actionneur de la figure 29.

## DESCRIPTION DETAILLEE D'UN PREMIER ACTIONNEUR

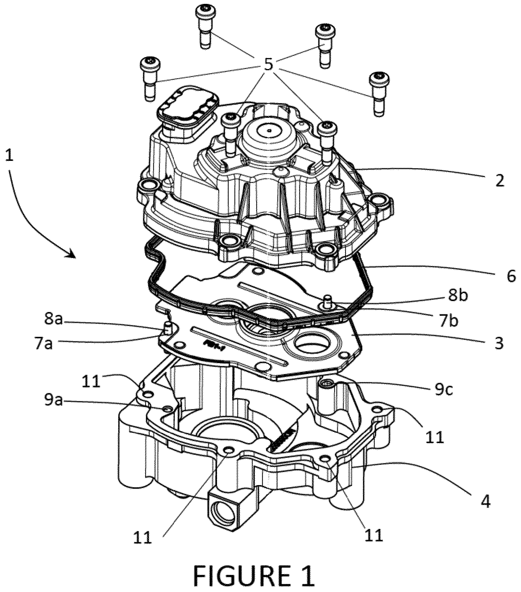

En figure 1 est présenté un premier mode de réalisation d'un actionneur (1) selon l'invention. De manière générale et commune à toutes les réalisations couvertes par l'invention, l'actionneur (1) est formé par trois parties principales : un boitier (2), une plaque intermédiaire (3) et un couvercle (4). On voit aussi sur cette figure 1, ainsi que certaines autres figures, des vis de fixations (5) et un joint d'étanchéité (6) dont le positionnement sera explicité plus loin. Ce joint (6) est le seul joint assurant l'étanchéité entre le boîtier et le couvercle, alors que dans les solutions de l'art antérieur et notamment le brevet WO2018/088356, il est nécessaire de prévoir deux joints d'étancheité.

Cette figure 1 montre un premier exemple d'actionneur dans lequel le boitier (2) est réalisé dans une matière plastique injectable. Ce boitier (2) a notamment la fonction d'accueillir un moteur électrique (non visible ici) qui sera détaillé plus loin, par le surmoulage du stator de ce moteur avec ladite matière plastique. Le couvercle (4) a pour objet d'accueillir notamment un réducteur mécanique (non visible ici) qui sera détaillé plus loin. La plaque intermédiaire (3) a pour objet de guider les éléments tournants du réducteur mécanique tout en permettant la liaison mécanique entre le rotor du moteur électrique et le réducteur mécanique. Le joint d'étanchéité (6) est destiné à être positionné à l'interface entre le boitier (2) et le couvercle (4) de manière à réaliser une étanchéité par écrasement axial lors de l'assemblage. Les vis de fixation (5) sont destinées à fixer le boitier (2) sur le couvercle (4) au niveau des taraudages (11) en contraignant la plaque intermédiaire comme il sera explicité plus loin. Les taraudages (11) peuvent aussi être des trous borgnes dans lesquels sont vissées des vis auto-formeuses.

L'appui de la plaque intermédiaire est localisée - uniquement - autour des trous de centrage recevant les pions (8a, 8b), ce qui permet notamment de placer un seul joint d'étanchéité à l'interface entre le couvercle et le boitier et d'améliorer l'étanchéité par rapport à la solution proposée dans le document de l'art antérieur WO2018/088356.

Dans un premier mode de réalisation de l'invention lié à ce premier actionneur (1), le boitier (2) plastique présente, non visible ici, un premier couple de trous formé d'un centreur cylindrique et un centreur dégagé ; la plaque intermédiaire (3) présente un deuxième couple de trous sous la forme de deux perçages, ou centreurs cylindriques (7a, 7b) qui accueillent deux pions de centrage (8a, 8b).

Ces deux pions de centrage (8a, 8b) peuvent être :

  ○ Soit dissociés de la plaque intermédiaire et introduit en aval de la fabrication de la plaque

  ○ Soit intégrés à la plaque intermédiaire et donc forme une seule pièce avec la plaque formant alors une pièce unique.

Le couvercle (4) présente un troisième couple de trous formés d'un centreur cylindrique (9a) et un centreur dégagé (9c) ici sous la forme d'un perçage oblong. L'utilisation astucieuse de seulement deux pions et de trois couples de trous sur les trois éléments principaux cités ci-dessus, dont deux des couples de trous forment des centreurs cylindriques et des centreurs dégagés et dont l'autre couple de trous forme deux centreurs cylindriques, les centreurs cylindriques et dégagés correspondant, permet de garantir un positionnement relatif optimal desdits trois éléments. Le positionnement des pions (8a, 8b) sur la plaque intermédiaire (3) dans des centreurs cylindriques (7a, 7b) représente la configuration préférée car permet d'envisager un seul type de plaque intermédiaire (3) compatible avec plusieurs formes de boitier (2) et/ou de couvercle (4).

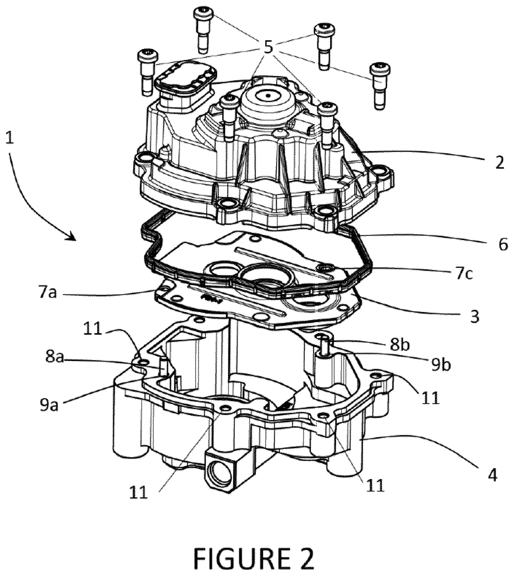

La figure 2 est un deuxième mode de réalisation de ce premier actionneur qui diffère du premier mode en ce que les pions de centrage (8a, 8b) sont positionnés dans le couple de trous du couvercle (4), formant deux centreurs cylindriques (9a, 9b) et en ce que la plaque intermédiaire (3) comprend un couple de trous formant un centreur cylindrique (7a) et un centreur dégagé (7c). Comme pour le premier mode de réalisation, le boitier (2) plastique présente, non visible ici, un couple de trous formé d'un centreur cylindrique et un centreur dégagé. Il s'agit d'une alternative de réalisation au premier mode.

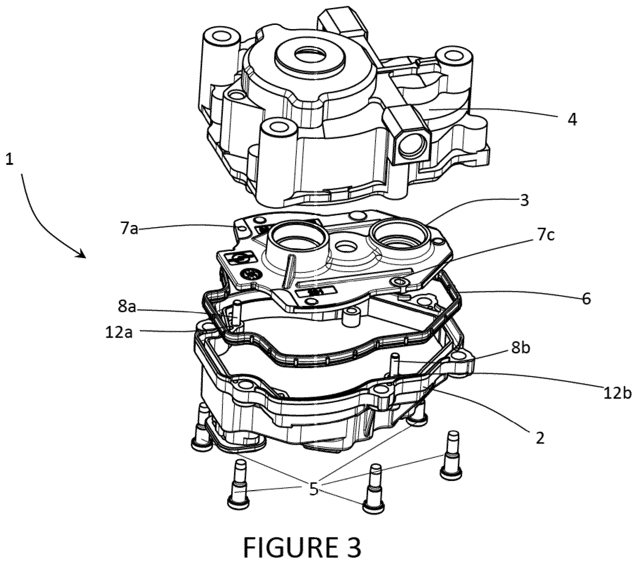

Une troisième alternative de réalisation de ce premier actionneur est présentée en figure 3. Elle diffère des premier et deuxième modes en ce que les pions de centrage (8a, 8b) sont positionnés dans le couple de trous du boitier (2) plastique, formant deux centreurs cylindriques (12a, 12b) et en ce que la plaque intermédiaire (3) comprend un couple de trous formant un centreur cylindrique (7a) et un centreur dégagé (7c). Comme pour le premier mode de réalisation, le couvercle (4) présente, non visible ici, un couple de trous formé d'un centreur cylindrique et d'un centreur dégagé.

## DESCRIPTION DETAILLEE D'UN DEUXIEME ACTIONNEUR

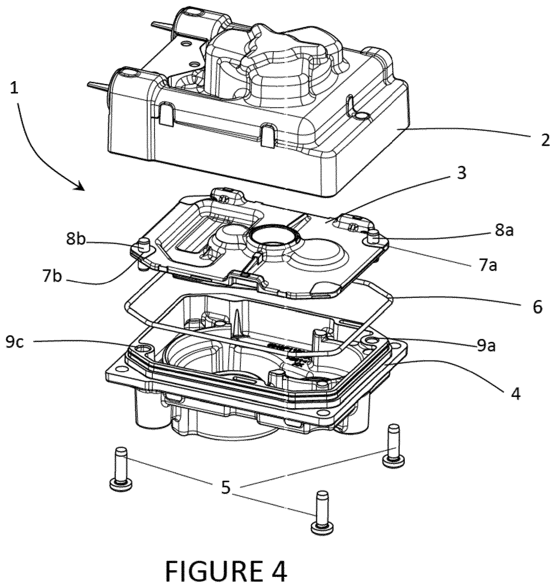

Les figures 4, 5 et 6 représentent, pour un deuxième type d'actionneur, les équivalents aux figures 1, 2 et 3 pour ce qui est du positionnement relatif des différents couples de trous et centreurs cylindriques et dégagés. Le deuxième actionneur diffère du premier en ce que le boitier (2) est ici formé en une matière métallique, par exemple en aluminium moulé ou injecté, dans lequel est destiné à être fixé, par exemple par vissage, le stator d'un moteur électrique. Cette réalisation permet de réaliser un actionneur plus robuste permettant notamment de mieux dissiper l'énergie thermique dégagée par le circuit imprimé (non montré sur ces figures) portant les composants d'alimentation et de pilotage du moteur et par le moteur électrique. Le deuxième actionneur diffère aussi du premier en ce que les vis de fixation (5) sont destinées à se visser dans le boitier (2) au lieu du couvercle (4). Il diffère enfin du premier en ce que le joint d'étanchéité (6) réalise une étanchéité par compression radiale du joint d'étanchéité (6). De manière similaire aux explications des figures 1, 2 et 3 :

Dans un premier mode de réalisation de l'invention lié à ce deuxième actionneur en figure 4, le boitier (2) métallique présente, non visible ici, un premier couple de trous formé d'un centreur cylindrique et un centreur dégagé ; la plaque intermédiaire (3) présente un deuxième couple de trous sous la forme de deux centreurs cylindriques (7a, 7b) qui accueillent deux pions de centrage (8a, 8b) et le couvercle (4) présente un troisième couple de trous formés d'un centreur cylindrique (9a) et un centreur dégagé (9c) ici sous la forme d'un perçage oblong.

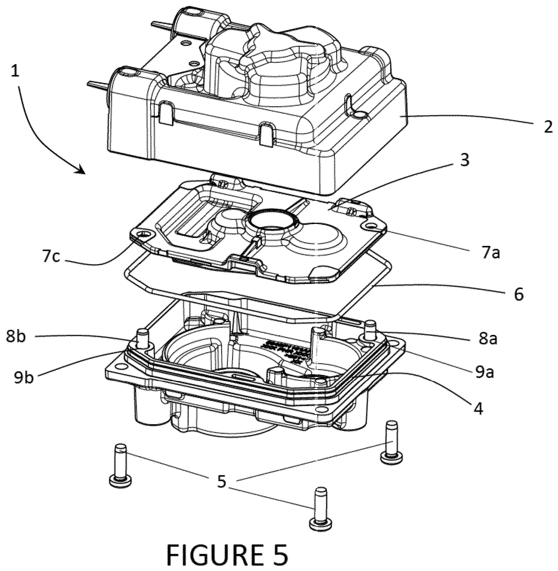

La figure 5 est un deuxième mode de réalisation de ce deuxième actionneur qui diffère du premier mode en ce que les pions de centrage (8a, 8b) sont positionnés dans le couple de trous du couvercle (4), formant deux centreurs cylindriques (9a, 9b) et en ce que la plaque intermédiaire (3) comprend un couple de trous formant un centreur cylindrique (7a) et un centreur dégagé (7c). Comme pour le premier mode de réalisation, le boitier (2) métallique présente, non visible ici, un couple de trous formé d'un centreur cylindrique et un centreur dégagé. Il s'agit d'une alternative de réalisation au premier mode.

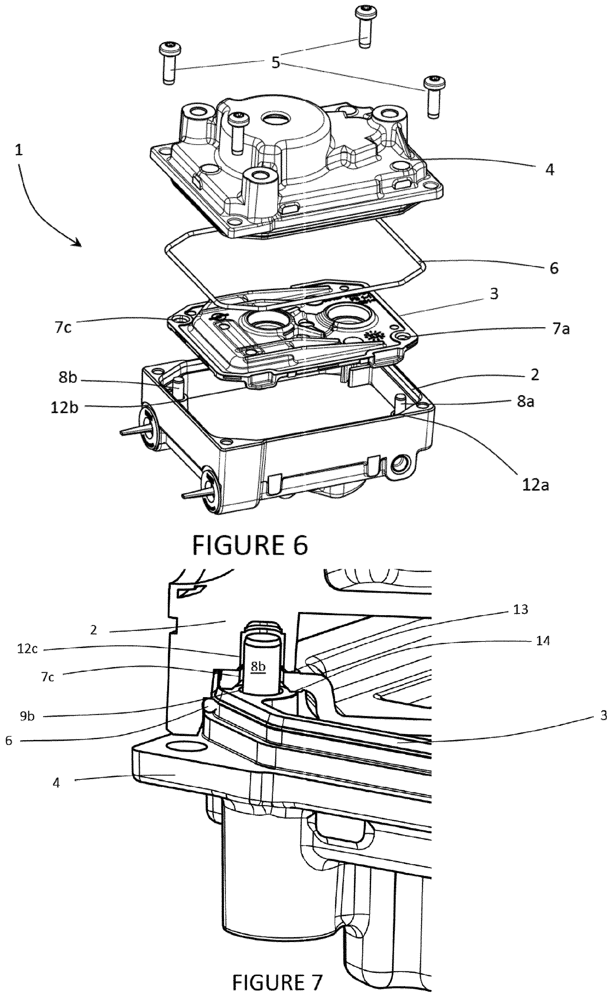

Une troisième alternative de réalisation de ce deuxième actionneur est présentée en figure 6. Elle diffère des premier et deuxième modes en ce que les pions de centrage (8a, 8b) sont positionnés dans le couple de trous du boitier (2) métallique, formant deux centreurs cylindriques (12a, 12b) et en ce que la plaque intermédiaire (3) comprend un couple de trous formant un centreur cylindrique (7a) et un centreur dégagé (7c). Comme pour le premier mode de réalisation, le couvercle (4) présente, non visible ici, un couple de trous formé d'un centreur cylindrique et d'un centreur dégagé.

## DESCRIPTION DETAILLEE DES FONCTIONS PRINCIPALES

Les figures 7, 8 et 9 sont des vues de détails ou en coupe du deuxième mode de réalisation du deuxième actionneur. Néanmoins, les descriptions et caractéristiques des éléments et des fonctions qui y sont relatives ci-après peuvent tout à fait s'appliquer, *mutatis mutandis,* aux autres modes de réalisation décrits ci-dessus.

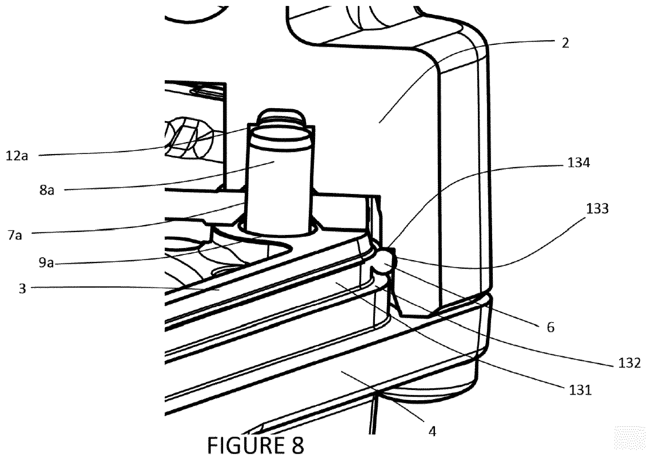

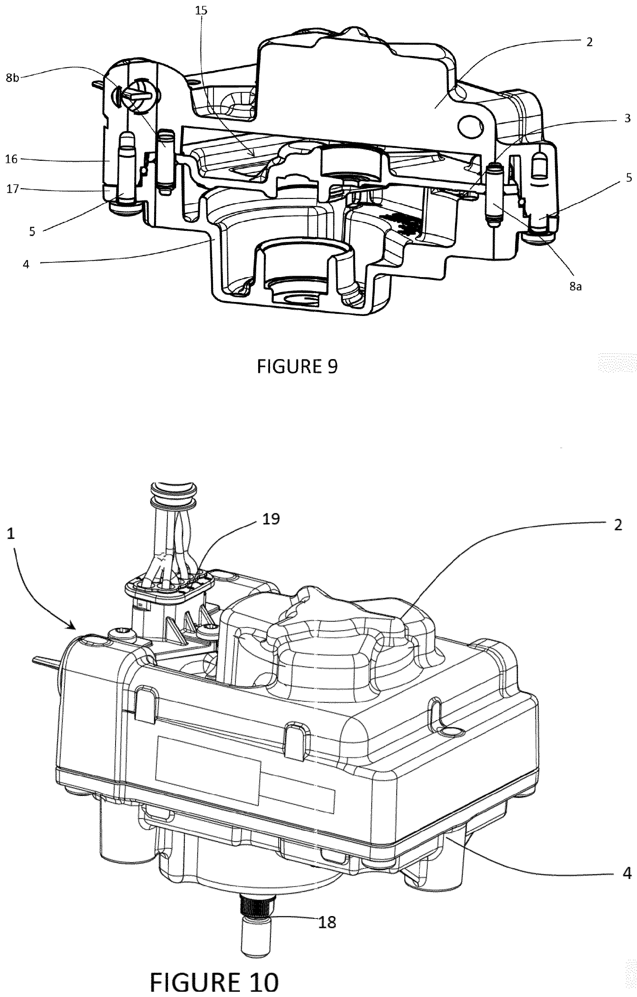

Les figures 7 et 8 sont des vues isolées au niveau des centreurs, respectivement dégagés (7c, 12c) et cylindriques (7a, 12a) réalisés sur la plaque intermédiaire (3) et le boitier (2), permettant le montage, le guidage et bloquant la rotation de ces derniers sur les pions de centrage (8a, 8b) placés respectivement dans les centreurs cylindriques (9a, 9b) du couvercle (4). La plaque intermédiaire (3) est maintenue axialement entre le boitier (2) et le couvercle (4) par la contrainte exercée par ces derniers au niveau de deux surfaces d'appui axiales (13, 14) autour des trous de centrage entre, respectivement, d'une part le boitier (2) et la plaque intermédiaire (3) et d'autre part entre la plaque intermédiaire (3) et le couvercle (4). En référence à la figure 9, la plaque intermédiaire (3) est installée dans une première cavité (15) du boitier (2). Ainsi, lors du vissage du couvercle (4) sur le boitier (2) - ou du boitier (2) sur le couvercle (4) pour une réalisation du premier actionneur - le pourtour (16) du boitier (2) vient au voisinage du pourtour (17) du couvercle (4), d'abord sans contact puis, par élasticité des composants mis en jeu, avec un contact au fur et à mesure du vissage, et la situation mécanique hyperstatique générée au niveau de la liaison contrainte entre boitier (2), plaque intermédiaire (3) et couvercle (4) assure un parfait maintien en place de la plaque intermédiaire (3) via l'élasticité du pourtour (17). L'actionneur (1) monté vissé est ainsi visible en figure 9.

En référence à la figure 8, l'étanchéité de l'actionneur est assurée par le joint (6) positionné autour d'une première surface radiale (131) du couvercle (4) et à l'intérieur d'une deuxième surface radiale (133) du boitier (2) et entre une première surface axiale (132) du couvercle (4) et une deuxième surface axiale (134) du boitier (2), les termes « axial » et « radial » s'interprétant par rapport à l'axe de sortie du moteur. Dans ce mode de réalisation de l'actionneur, l'étanchéité est réalisée radialement par l'écrasement du joint (6) entre ces premières et deuxièmes surfaces (131, 133).

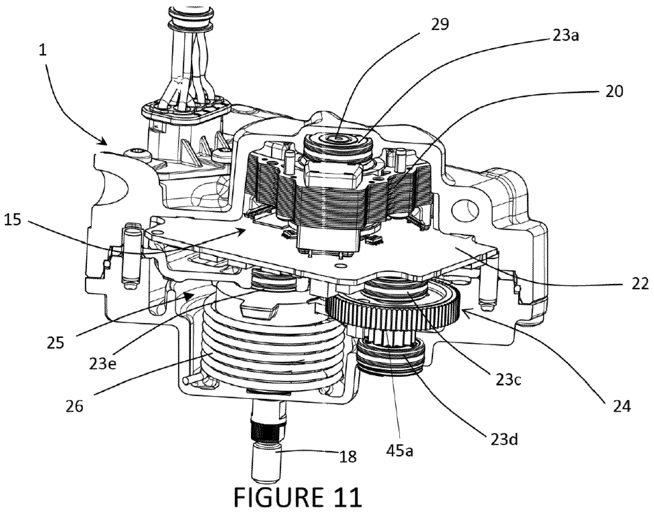

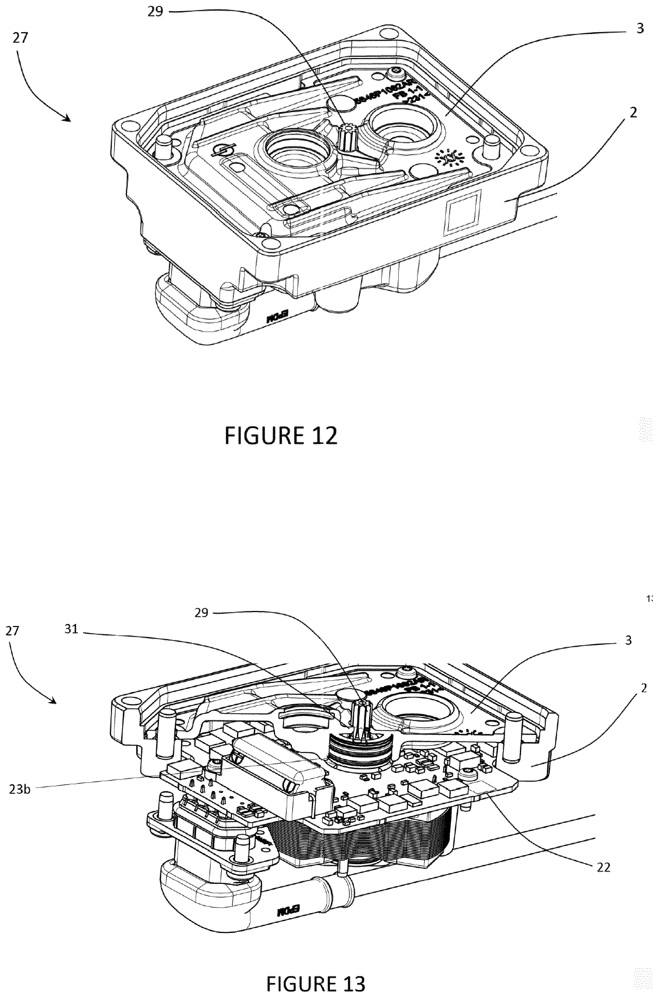

Les figures 10 et 11 montrent des vues d'ensemble, respectivement entière et en coupe partielle, du deuxième actionneur dans une première variante dite « complète » où cet actionneur peut venir se positionner au niveau d'un organe extérieur (non montré) grâce à son arbre de sortie (18). L'actionneur (1) est alimenté en tension électrique et en signal de positionnement par un connecteur (19). Le boitier (2) reçoit dans sa cavité (15) un moteur électrique formé d'un stator (20) et d'un rotor (non visible) ainsi qu'un circuit imprimé (22) en connexion électrique avec le bobinage du stator (20) par une connectique de type press-fit et en connexion mécanique vissée dans la cavité (15) du boitier (2). Le boitier (2) reçoit un roulement à billes (23a) servant au guidage de l'arbre du rotor (non visibles ici). Un réducteur mécanique (24), positionné dans le couvercle (4), est entrainé par ledit rotor et est formé de roues dentées montées sur des axes (non visibles). Le couvercle (4) définit une seconde cavité (25) dans laquelle sont montés et guidés sur une première extrémité lesdits axes dudit réducteur mécanique portant une roue dentée (45a) grâce à des roulements (23c-23d). La plaque intermédiaire (3) sert au guidage d'une extrémité de l'arbre (29) du rotor, non visible ici mais présenté en figure 12, grâce au roulement (23b), non visible ici mais présenté en figure 12, et sert au guidage des autres extrémités des axes du réducteur mécanique (24) grâce à des roulements (23c, 23e). Dans cette réalisation, sans que cela ne soit limitatif, un ressort de torsion (26) est aussi installé dans le couvercle (4) appliquant un couple sur l'arbre de sortie (18) permettant de ramener l'ensemble mobile en une position prédéfinie lors de l'extinction ou de la défaillance de l'alimentation du moteur électrique. Il est aussi à noter que les différents roulements (23a, 23b, 23c, 23d, 23e, 23g, 23h) désignés dans l'ensemble des figures peuvent être remplacés par des paliers lisses ou tout autre élément de guidage sans que cela ne s'écarte de l'invention.

## DESCRIPTION DETAILLEE DES MODES DE REALISATION ALTERNATIFS

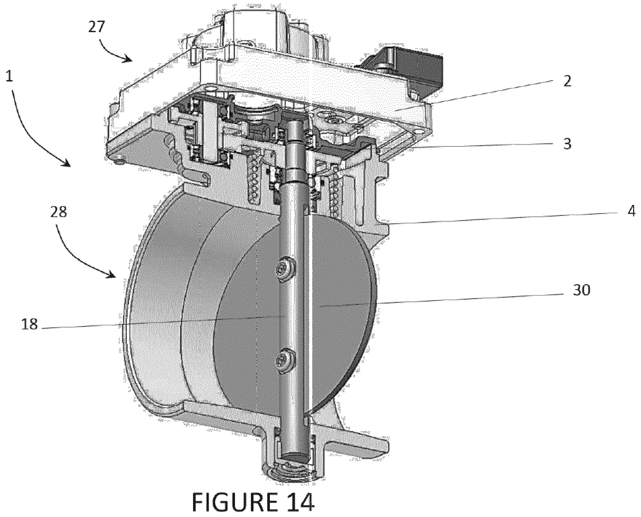

Les figures 12 et 13 présentent le deuxième actionneur dans une deuxième variante dite « demi-actionneur » où un premier ensemble (27) de l'actionneur est mise en forme en assemblant le boitier (2) et la plaque intermédiaire (3) selon le troisième mode de réalisation décrit ci-dessus. L'actionneur complet est ensuite réalisé en assemblant ce premier ensemble (27) sur le couvercle (4) tel que présenté en figure 14. Dans ce mode de réalisation particulier, le couvercle (4) intègre directement l'organe à commander. A titre d'exemple donné en cette figure 14, le couvercle (4) forme un corps de vanne (28) et l'arbre de sortie (18) porte un volet (30) de type « papillon », le tout formant une vanne d'admission d'air pour un moteur à combustion interne. Au montage de l'actionneur (1), le premier ensemble (27) vient donc se monter directement sur le corps de vanne (28) formant le couvercle (4) et le réducteur mécanique (24) engage, à travers une lumière (31) de la plaque intermédiaire (3), l'arbre (29) du rotor (21).

La figure 13 présente une vue en coupe partielle du premier ensemble (27) qui permet de visualiser le circuit imprimé (22) qui comprend l'ensemble des composants électroniques servant à l'alimentation et au pilotage du moteur de l'actionneur (1), ainsi que le roulement à billes (23b) servant au guidage de l'arbre (29) du rotor (21) dont la bague extérieure est ajustée dans un logement de la plaque intermédiaire (3).

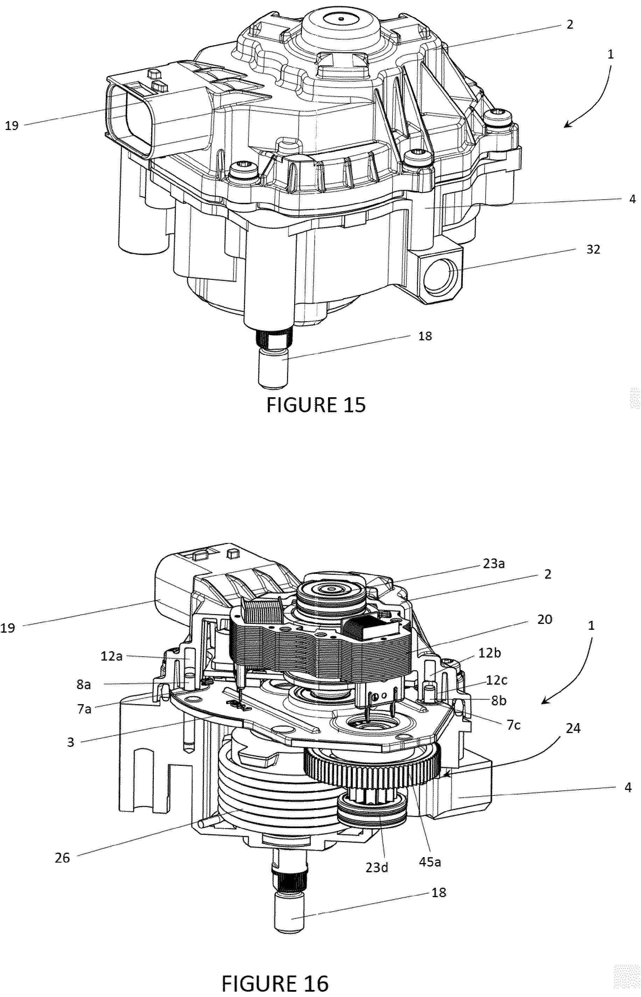

Les figures 15 et 16 montrent le premier actionneur dans une variante « complète » où le connecteur (19) est surmoulé en matière plastique avec le corps du boitier (2). Son orientation est radiale mais elle peut aussi être envisagée axiale au-dessus du boitier (2). L'ouverture (32) visible dans le couvercle (4) est une entrée pour un fluide caloporteur servant au refroidissement de l'actionneur (1) lorsque celui-ci est utilisé à forte charge et dans un environnement porté à haute température, par exemple à proximité d'un moteur à explosion.

La figure 16 est une vue en coupe partielle permettant d'apprécier le positionnement relatif des roulements (23a, 23d) et du stator (20) dans le boitier (2), séparés par la plaque intermédiaire (3) du réducteur mécanique (24) et du ressort de torsion (26). Au niveau du boitier (2), cette variante présente aussi deux centreurs coaxiaux, l'un étant cylindrique (12b), l'autre étant dégagé (12c). Cette réalisation combinée permet d'envisager l'utilisation d'un seul type de surmoulage compatible avec les trois différents modes de réalisation décrits en figures 1, 2 et 3, en conjonction avec la hauteur du pion de centrage (8b) utilisé. Ici en figure 16, les éléments de l'actionneur complet sont montés selon le premier mode de réalisation, le pion de centrage (8b) est un pion court qui s'engage dans le centreur dégagé (12c) du boitier (2).

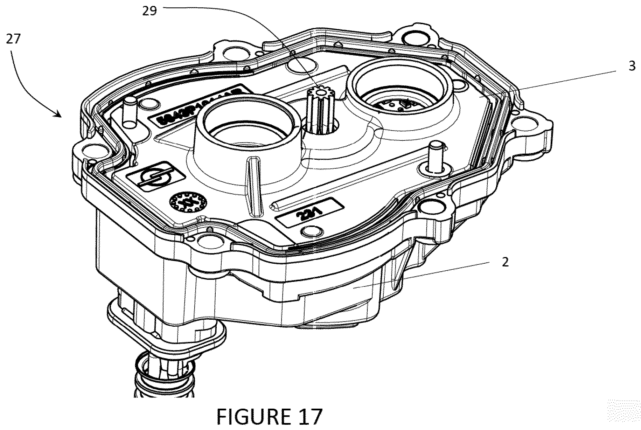

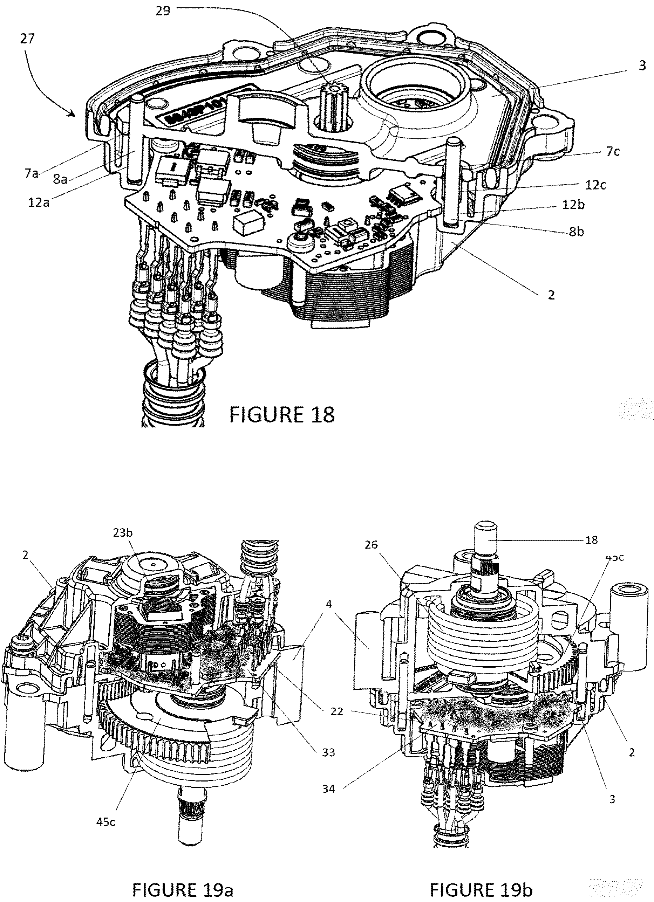

Les figures 17 et 18 présentent une variante « demi-actionneur » du premier actionneur formé d'un premier ensemble (27) comprenant le boitier (2) et la plaque intermédiaire (3). Dans cette variante, le pion de centrage (8b) est un pion long qui s'engage dans le centreur cylindrique (12b) du boitier (2), le montage étant selon le troisième mode de réalisation décrit plus haut.

Les figures 19a et 19b présentent une variante de réalisation des actionneurs, ici sur la base du premier actionneur bien que cela ne soit pas limitatif, au niveau du circuit imprimé (22) et favorisant la dissipation thermique émise par le circuit imprimé (22). Dans cette variante, le circuit imprimé (22) porte l'ensemble des composants sur une seule de ses faces, cette première face (33) étant celle orientée axialement vers le moteur électrique et le fond du boitier (2). Cette réalisation permet d'une part d'accoler la deuxième face (34) du circuit imprimé, opposée axialement à la première face (33), à la plaque intermédiaire (3), ce qui favorisera par conduction - la plaque intermédiaire étant choisie en une matière conductrice thermiquement -, l'évacuation des calories par la partie métallique du couvercle (4). D'autre part, il est possible d'utiliser une pâte thermique - en nuage de points sur le circuit imprimé (22) - des deux côtés du circuit imprimé (22), cette pâte étant écrasée entre le boitier (2) et la plaque intermédiaire (3) d'une part et le couvercle (4) et la plaque intermédiaire (3) d'autre part, afin de favoriser encore cette conduction thermique vers les parties les plus conductrices de l'actionneur (1). Sur ces figures 19a et 19b est visible la roue dentée de sortie (45c) du réducteur, ainsi qu'un ressort de torsion (26) qui agit sur cette roue dentée de sortie pour ramener l'arbre de sortie (18) en une position déterminée lors de l'arrêt d'alimentation du moteur.

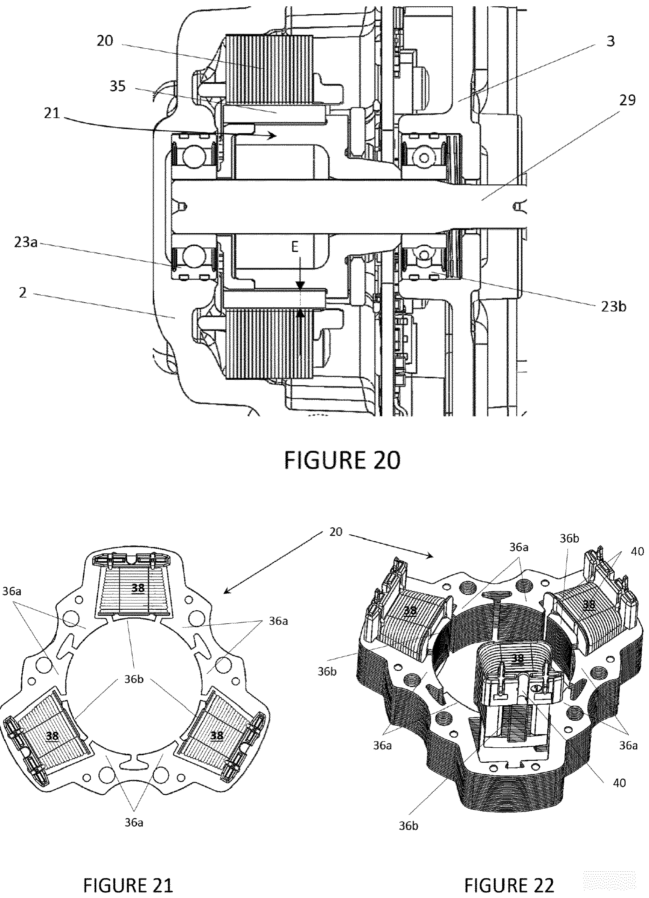

Sur la figure 20, représentant une vue de détail du moteur électrique en coupe, est montré l'utilisation d'un aimant (35) au rotor (21), dont la longueur peut être variable afin d'augmenter les performances du moteur. En effet, à hauteur axiale de stator (20) donnée, la hauteur axiale de l'aimant (35) au rotor (21) influence le couple produit à puissance électrique constante. Cette réalisation n'est qu'une variante par rapport à un cas plus classique où la hauteur de l'aimant (35) est équivalente à celle du stator (20).

Les figures 21, 22 et 23 montrent un exemple de stator (20) de moteur électrique pouvant être utilisé par le premier ou deuxième actionneur ou tout autre actionneur non montré ici mais couvert par la présente invention. Particulièrement, ce stator (20) propose de résoudre les problèmes de limitation de performance des actionneurs, notamment les limitations induites par l'oscillation de couple lors des commutations électriques et par le couple magnétostatique. Ce stator (20) est également associé à une solution pour l'optimisation du remplissage en cuivre de la bobine.

Pour ce stator (20), l'ensemble des dents statoriques (36a, 36b) présentent des collecteurs de champ (37) s'étendant, relativement à l'axe de rotation du rotor, dans une direction tangentielle. A cet effet, les dents (36a) ne recevant pas de bobine sont d'un seul tenant avec le reste du circuit fer statorique réalisé sous forme d'un paquet de tôles alors que les dents (36b) recevant une bobine (38) sont indépendantes et rapportées sur le circuit fer. Afin d'optimiser les performances de l'actionneur, notamment l'oscillation de couple et le couple magnétostatique, les collecteurs de champ présentent dans un plan axial les caractéristiques géométriques suivantes : relativement à une grandeur D représentant le nombre de dents au stator, on préconise de respecter la formule :

GAP ≈ 360 / (8xD), GAP représentant la distance tangentielle séparant les collecteurs de deux dents adjacentes ;

Relativement à la grandeur E, épaisseur radiale de l'aimant rotor visible en figure 20, on préconise : $EP2 \geq 0.75xE$ et $EP1 < EP2$, EP1 représentant l'épaisseur radiale minimale à l'extrémité du collecteur de champ (37), EP2 représentant l'épaisseur radiale maximale à la naissance du collecteur de champ (37).

Les dents (36b) présentent une section centrale permettant la mise en place de la bobine (38) par translation depuis l'extérieur/arrière. De même, le moyen de liaison (mécanique et magnétique) entre la dent (36b) rapportée et le circuit statorique est inscrit dans la section minimum de la bobine (38). On peut également envisager une solution de bobinage directement sur la dent tout en conservant la possibilité de retirer la bobine (38) et récupérer la dent (36b) en cas de défaut de fabrication. Les dents (36b) ainsi équipées de leur bobine (38) sont rapportées et liées au stator (20) dans une direction axiale relativement à l'axe de rotation du rotor (21). Le moyen de liaison doit assurer un bon maintien mécanique de la dent (36b) sur le stator (20) et il doit également assurer un joint magnétique de bonne qualité pour ne pas introduire de perméance magnétique parasite détériorant les performances. Une solution de type queue d'aronde est particulièrement indiquée dans ce cas, permettant une solution économique, des formes simples avec tolérances précises et un bon maintien mécanique. Le corps de bobine (39) présente des évidements (40), ici au nombre de 3 sans que cela soit limitatif, de part et d'autre des bobines (38) pour les appuis d'emmanchement sur la dent (36b) lors de l'opération d'assemblage. Le circuit statorique présentant sur un secteur angulaire de 120° une périodicité en forme de W, la bobine (38) présente alors une forme complémentaire à ce W afin de maximiser le taux de remplissage en cuivre de la section effectivement disponible. La forme du bobinage ainsi obtenue est de forme sensiblement tronconique. La solution conique proposée permet un gain sur le couple sans significativement altérer l'impédance de la bobine par un remplissage optimisé de l'encoche inter-dentaire.

Pour réaliser et industrialiser ce type de bobinage particulier, le corps de bobine (39) présente une section centrale périphérique en dents de scie, l'angle des dents (43) étant équivalent à l'angle du cône du bobinage (environ 7° sur cet exemple non limitatif), le nombre de dents (43) étant de 2 ou plus, les dents (43) n'étant pas forcément de longueur identique. Afin d'assurer la bonne cohésion du stator (20) ainsi assemblé, et d'améliorer son comportement thermique, il sera idéalement, mais non limitativement, surmoulé avec une matière thermoplastique localisée au niveau de chaque couple de dent (36b) / bobine (38) rapporté. Alternativement, chaque dent (36b) peut être surmoulée de manière indépendante avant d'être rapportée et fixée au stator.

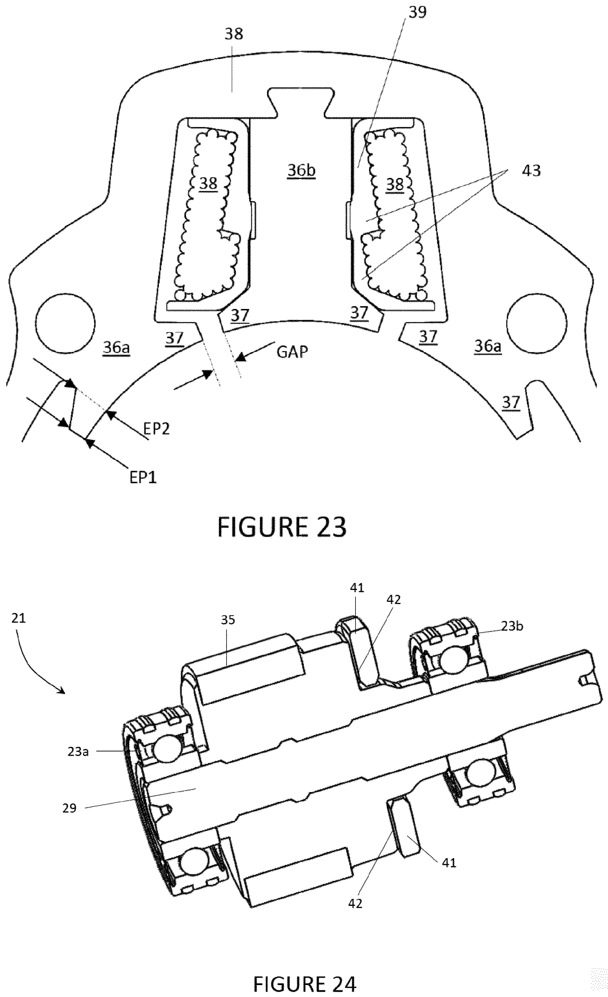

La figure 24 montre un exemple de réalisation du rotor (21) d'une machine électrique, pouvant être avantageusement utilisé dans la présente invention. Ce rotor (21) est composé d'un aimant permanent (35) surmoulé partiellement par une matière plastique injectée, d'un arbre (29) lui aussi surmoulé par la même matière plastique, et d'un aimant de capteur (41) positionné sur un plan (42) orthogonal à l'arbre (29) généré par la matière plastique, le rotor étant ici montré avec les roulements (23a, 23b) décrits plus haut. Cette réalisation est particulièrement avantageuse car elle évite le collage de l'aimant (35) sur une culasse avec une tenue mécanique à haute température problématique. Elle permet aussi d'augmenter le comportement dynamique via une inductance plus faible d'une part par l'absence de culasse ferromagnétique et d'autre part par une inertie moins importante due à la densité faible de la matière plastique ici majoritaire en volume. De plus, outre une simplification du montage du rotor (21) qui ne nécessite plus d'opération de collage, le couple magnétostatique et le couple de frottement sont réduits tout comme les efforts radiaux induits sur le rotor.

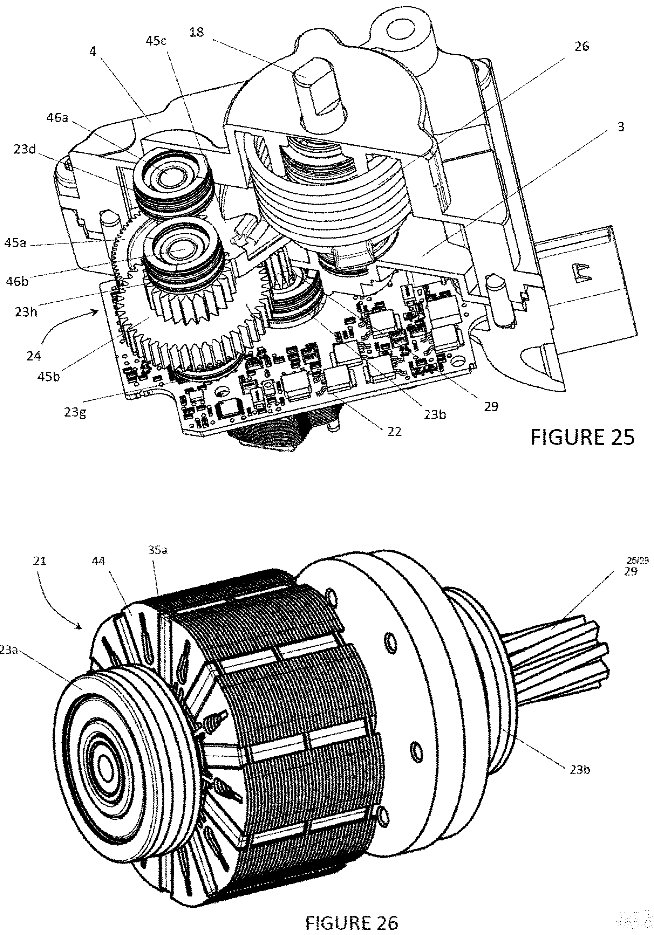

La figure 25 est une vue de coupe partielle qui permet d'observer le réducteur mécanique (24). Ce réducteur mécanique peut être constitué de plusieurs étages. Les réalisations présentées sur les figures précédentes montrent deux étages de réduction, alors que l'exemple de cette figure 25 montre trois étages de réduction. En effet, l'arbre du rotor (29) formant un pignon à son extrémité entraine la roue intermédiaire (45a) portée par un axe (46a) guidé par deux roulements (23g, 23h), qui entraine à son tour la roue dentée (45b) portée par l'axe (46b). La roue dentée (45b) entraine enfin la roue de sortie (45c). Comme dans toutes les réalisations présentées dans ce texte, tous les axes (46a, 46b) ou arbre (18) portant les roues dentées (45a, 45b, 45c) sont d'une part en portée sur le couvercle (2) sur une de leur extrémité et d'autre part en portée sur la plaque intermédiaire (3) sur l'autre de leur extrémité.

La figure 26 montre un rotor (21) dans une alternative de réalisation. Dans les exemples de réalisation précédents, ce rotor (21) présente un aimant de forme cylindrique porté ou non par une culasse ferromagnétique. Dans ce présent exemple de réalisation, le rotor (21) est constitué d'une alternance d'aimants (35a) de forme prismatique aimantée selon une direction tangentielle, insérés entre des pôles ferromagnétiques (44), selon une version dites à aimants intérieurs de type radial (réalisation « spoke-type » en anglais). La forme des pôles (44) est pseudo-circulaire et dessinée pour optimiser le couple avec et sans courant.

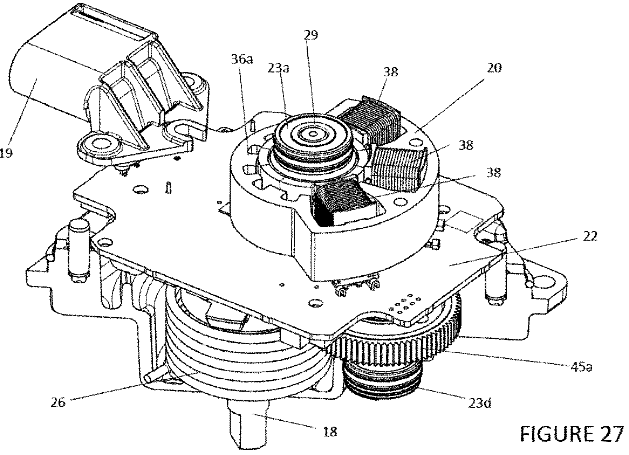

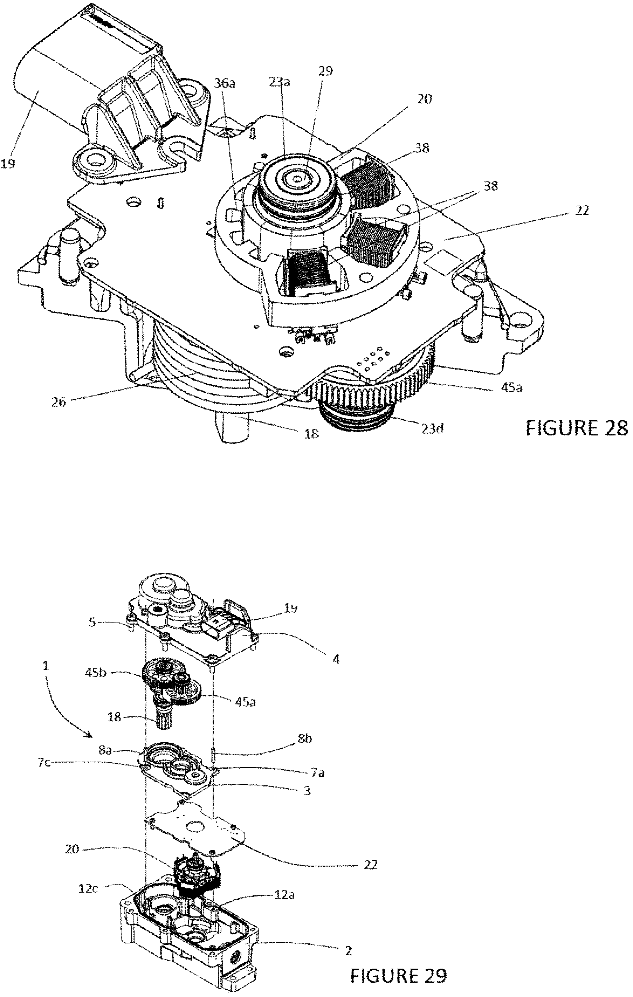

Les figures 27 et 28 montrent deux exemples de réalisation alternative du stator (21) du moteur électrique. En figure 27, le stator présente trois bobines (38) regroupés dans un secteur angulaire voisin de 120° et les dents statoriques (36a) ont des largeurs angulaires alternativement étroite et large telles que décrites par exemple dans la demande FR2919441. En figure 28, le stator présente trois bobines (38) regroupés dans un secteur angulaire voisin de 120° et les dents statoriques (36a) ont des largeurs angulaires identiques comme telles que décrites par exemple dans la demande FR2994353.

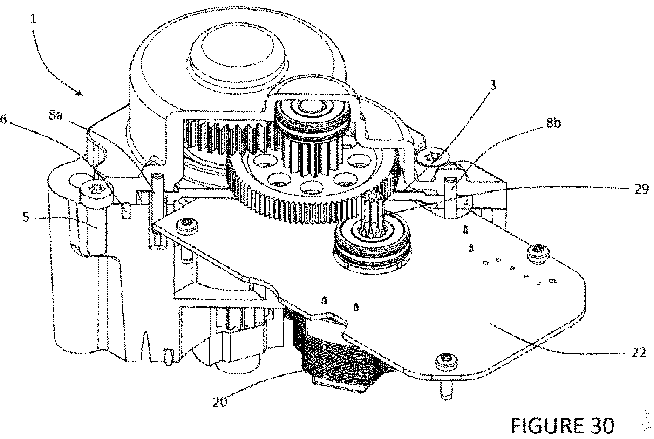

Les figures 29 et 30 représentent un mode de réalisation alternatif d'un actionneur selon l'invention. L'actionneur (1) comprend un boitier (2) recevant le stator (20) d'un moteur électrique, un couvercle (4) recevant un réducteur mécanique, une plaque intermédiaire (3) à l'intérieur de l'actionneur (1), ainsi qu'un circuit imprimé (22). Les pions de centrage (8a, 8b) permettent le positionnement du boitier (2), couvercle (4) et plaque intermédiaire (3) avec les différents centreurs : deux centreurs cylindriques (non visible) réalisés avec le couvercle (4), un centreur dégagé (7c) et un centreur cylindrique (7a) présents au niveau de la plaque intermédiaire (3), correspondant avec -respectivement- les centreurs dégagé (12c) et cylindrique (12a) présent au niveau du boitier (2). Les vis de fixation (5) sont destinées à fixer le couvercle (4) sur dudit boitier (2) pour la fermeture. Un connecteur (19) est solidaire sur le couvercle (4).

Positionné axialement entre la plaque intermédiaire (3) et le stator (20) se trouve le circuit imprimé (22), sur lequel sont connectés d'une part - et sur la face côté boitier (2)- les bobines électriques dudit stator (20) et d'autre part -sur la face côté couvercle (4)- les pistes du connecteur (19), afin de permettre l'alimentation électrique de l'actionneur (1) et la communication avec celui-ci. Le circuit imprimé est en connexion électrique avec le bobinage du stator (20) par une connectique de type press-fit comme illustré dans la figure 30. Sur la face côté couvercle (4), le circuit imprimé (22) est accolé à la plaque intermédiaire (3), ce qui favorise par conduction l'évacuation de la chaleur. La plaque intermédiaire (3) est découpée de telle façon à ce qu'elle ne couvre pas le circuit imprimé au niveau de connexion électrique.

## Revendications

1. Actionneur (1) électrique comprenant

   - un boitier (2),
   - un moteur électrique comprenant un stator (20) bobiné et un rotor (21) monté sur un arbre de rotor (29),
   - un circuit imprimé (22) servant à l'alimentation dudit stator (20) et au pilotage dudit moteur,
   - une plaque intermédiaire (3),
   - un réducteur mécanique (24) entrainé par ledit rotor (21) et formé de roues dentées (45a, 45b, 45c) montées sur des axes (46a, 46b, 46c),
   - un couvercle (4),
   - deux pions de centrage (8a, 8b),
   ledit boitier (2) définissant une première cavité (15) dans laquelle est logé ledit stator (20), et comprenant des moyens de guidage dudit arbre de rotor (29) sur une première extrémité,

ledit circuit imprimé (22) étant situé dans ladite première cavité (15) au-dessus dudit stator (20),

ladite plaque intermédiaire (3) étant située au-dessus dudit circuit imprimé (22),

ledit couvercle (4) définissant une seconde cavité (25) présentant des moyens de guidage des extrémités desdits axes (46a, 46b, 46c) dudit réducteur mécanique (24), ledit couvercle (4) étant situé au-dessus de ladite plaque intermédiaire (3),

ladite plaque intermédiaire (3) servant au guidage de l'autre extrémité dudit arbre de rotor (29), et servant au guidage des autres extrémités desdits axes (46a, 46b, 46c) dudit réducteur mécanique (24),

**caractérisé en ce que**

- la première cavité (15) dudit boitier (2) présente un premier couple de trous de centrage recevant lesdits deux pions de centrage (8a, 8b),
- ladite plaque intermédiaire (3) présente un deuxième couple de trous de centrage recevant lesdits deux pions de centrage (8a, 8b),
- ledit couvercle (4) présente un troisième couple de trous de centrage recevant lesdits deux pions de centrage (8a, 8b),
- ladite plaque intermédiaire (3) est en contact avec ledit boitier (2) et ledit couvercle (4) sur des surfaces d'appui (13, 14) localisées autour des trous de centrage,
- deux desdits premier, deuxième et troisième couples de trous sont composés :

  ∘ d'un centreur cylindrique (7a, 9a, 12a) réalisant une liaison pivot glissant avec deux degrés de liberté, en translation et rotation selon un axe seulement et

  ∘ d'un centreur dégagé (7c, 9c, 12c), réalisant une liaison linéaire rectiligne, avec quatre degrés de liberté, ou une liaison ponctuelle, avec 5 degrés de liberté.

- l'autre desdits premier, deuxième et troisième couples de trous est composé de deux centreurs cylindriques (7a, 7b, 9a, 9b, 12a, 12b) réalisant une liaison pivot glissant avec deux degrés de liberté, en translation et rotation selon un axe seulement
- ledit boîtier comportant un seul joint d'étanchéité (6) positionné à l'interface entre le boitier (2) et le couvercle (4).l'

2. Actionneur électrique selon la revendication 1 **caractérisé en ce que** ledit boitier (2) comprend une zone périphérique (16) présentant au moins deux premiers perçages de fixation (11) et **en ce que** ledit couvercle (4) comprend un zone périphérique (17) présentant au moins deux deuxièmes perçages (11) de fixation de manière à ce que la fixation dudit couvercle (4) et dudit boitier (2) soit réalisée par vissage à l'aide desdits premiers et deuxièmes perçages (11), lesdites zone périphériques (16, 17) n'étant pas jointifs lorsque ledit couvercle (4) et ledit boitier (2) sont en appui sur ladite plaque intermédiaire (3) avant le vissage et étant en appui et au moins partiellement jointifs après le vissage, de manière à contraindre et bloquer le mouvement de ladite plaque intermédiaire (3).

3. Actionneur électrique selon la revendication 1 **caractérisé en ce que** le couvercle (4) forme un corps de vanne (28).

4. Actionneur électrique selon la revendication 1 **caractérisé en ce que** les différentes portées de guidage dudit arbre de rotor (29) et desdits axes (46a, 46b, 46c) du réducteur mécanique (24) sont réalisées par le boitier (2), la plaque intermédiaire (3) et le couvercle (4), lesdites portées de guidages étant des roulements à billes (23a, 23b, 23c, 23d) ou des paliers lisses.

5. Actionneur électrique selon la revendication 1 **caractérisé en ce que** lesdits deux pions de centrage (8a, 8b) et ladite plaque intermédiaire (3) forment une seule et même pièce.

6. Actionneur électrique selon la revendication 1 **caractérisé en ce que** le boitier (2) est réalisé par surmoulage d'une matière plastique et présente sur un des trous dudit couple de trous de centrage deux centreurs coaxiaux, l'un cylindrique (12b), l'autre dégagé (12c).

7. Actionneur électrique selon la revendication 1 **caractérisé en ce que** le boitier (2) est réalisé par surmoulage d'une matière plastique et **en ce qu'**il comprend un connecteur (19) intégré au surmoulage.

8. Actionneur électrique selon la revendication 1 **caractérisé en ce que** le circuit imprimé (22) présente une première face (33) accueillant des composants électroniques et une deuxième (34) face libre de composants, ladite première face (33) faisant face au moteur électrique et au fond du boitier (2), ladite deuxième face (34) faisant face à la plaque intermédiaire (3).

**9.** Actionneur électrique selon la revendication précédente **caractérisé en ce que** les première (33) et deuxième faces (34) du circuit imprimé (22) sont recouvertes au moins partiellement avec une pâte thermique étant aussi en contact au moins partiellement avec, respectivement, le boitier et la plaque intermédiaire (3).

**10.** Actionneur électrique selon la revendication 1 **caractérisé en ce que** le stator (20) bobiné présente des dents statoriques (36a, 36b) prolongées tangentiellement par des collecteurs de champ magnétique (37), **en ce qu'**au moins une partie desdites dents (36b) portent des bobines (38) et sont rapportées sur le stator (20) et **en ce que** lesdites bobines (38) présentent une forme tronconique.

**11.** Actionneur électrique selon la revendication précédente **caractérisé en ce que** chaque dent statorique (36b) portant une bobine (38) présente, avec deux dents adjacentes (36a), une forme de W, les flancs extérieurs de la bobine (38) tronconique étant parallèles aux flancs intérieurs desdites dents adjacentes (36a).

**12.** Actionneur électrique selon la revendication 10 **caractérisé en ce que**, D désigne le nombre de dents statoriques (36a, 36b) et GAP désigne la distance tangentielle entre les collecteurs de champ (37) entre deux dents adjacentes (36a), avec

$$GAP = (360 / (8xD)) \pm 5\%$$

**13.** Actionneur électrique selon la revendication 10 **caractérisé en ce que** ledit rotor (21) présente un aimant (35), **en ce que** E désigne l'épaisseur radiale dudit aimant (35)- EP1 désigne l'épaisseur radiale minimale à l'extrémité du collecteur de champ (37) et EP2 désigne l'épaisseur radiale maximale à la naissance du collecteur de champ (37), avec

$$EP2 \geq 0.75xE \text{ et } EP1 < EP2.$$

**14.** Actionneur électrique selon la revendication 1 **caractérisé en ce que** le rotor (21) comprend un aimant (35) permanent surmoulé partiellement par une matière plastique injectée, ce surmoulage englobant partiellement l'arbre de rotor (29) et formant un plan (42), orthogonal à l'arbre (29), sur lequel est positionné un aimant de capteur (41).

**15.** Actionneur électrique selon la revendication 1 **caractérisé en ce que** le rotor (21) comprend un aimant (35) permanent surmoulé partiellement par une matière plastique injectée, ce surmoulage englobant partiellement l'arbre de rotor (29) et formant un aimant de capteur (41).

**Patentansprüche**

**1.** Elektrischer Aktuator (1), umfassend

- ein Gehäuse (2),
- einen Elektromotor, umfassend einen gewickelten Stator (20) und einen Rotor (21) der auf einer Rotorwelle (29) montiert ist,
- einen gedruckten Schaltkreis (22), der zur Versorgung des Stators (20) und zur Steuerung des besagten Motors dient,
- eine Zwischenplatte (3),
- ein mechanisches Untersetzungsgetriebe (24), das von dem Rotor (21) angetrieben wird und aus Zahnrädern (45a, 45b, 45c) gebildet ist, die auf Achsen (46a, 46b, 46c) montiert sind,
- einen Deckel (4),
- zwei Zentrierstifte (8a, 8b),

wobei das Gehäuse (2) einen ersten Hohlraum (15) definiert, in dem der Stator (20) untergebracht ist, und Mittel zum Führen der Rotorwelle (29) an einem ersten Ende umfasst, wobei die Leiterplatte (22) in dem ersten Hohlraum (15) über dem Stator (20) angeordnet ist, wobei sich die Zwischenplatte (3) über der Leiterplatte (22) befindet, wobei der Deckel (4) einen zweiten Hohlraum (25) definiert, der Mittel zur Führung der Enden der Achsen (46a, 46b, 46c) des mechanischen Untersetzungsgetriebes (24) aufweist, wobei der Deckel (4) über der Zwischenplatte (3) angeordnet ist, wobei die Zwischenplatte (3) zur Führung des anderen Endes der Rotorwelle (29) dient und zur Führung der anderen Enden der Achsen (46a, 46b, 46c) des mechanischen Untersetzungsgetriebes (24) dient, **dadurch gekennzeichnet, dass**

• der erste Hohlraum (15) des Gehäuses (2) ein erstes Paar Zentrierlöcher aufweist, das die beiden Zentrierstifte (8a, 8b) aufnimmt,
• die genannte Zwischenplatte (3) ein zweites Paar Zentrierlöcher aufweist, das die beiden Zentrierstifte (8a, 8b) aufnimmt,
• der Deckel (4) ein drittes Paar Zentrierlöcher aufweist, das die beiden Zentrierstifte (8a, 8b) aufnimmt,
• die Zwischenplatte (3) mit dem Gehäuse (2) und dem Deckel (4) an Auflageflächen (13, 14) in Kontakt steht, die um die Zentrierlöcher herum lokalisiert sind,
• zwei der ersten, zweiten und dritten Lochpaare zusammengesetzt sind aus:

  ◦ einer zylindrischen Zentriereinrichtung (7a, 9a, 12a), die eine gleitende Schwenkverbindung mit zwei Freiheitsgraden herstellt, die nur um eine Achse translatorisch und rotierend ist und

○ einer freiliegenden Zentrierung (7c, 9c, 12c), die eine geradlinige, lineare Verbindung mit vier Freiheitsgraden oder eine punktuelle Verbindung mit 5 Freiheitsgraden herstellt.

• das andere der ersten, zweiten und dritten Lochpaare aus zwei zylindrischen Zentrierungen (7a, 7b, 9a, 9b, 12a, 12b) besteht, die eine gleitende Drehverbindung mit zwei Freiheitsgraden herstellen, die nur um eine Achse translatorisch und rotatorisch ist
• wobei das Gehäuse eine einzelne Dichtung (6) aufweist, die an der Schnittstelle zwischen dem Gehäuse (2) und dem Deckel (4) positioniert ist.

2. Elektrischer Aktuator nach Anspruch 1, **dadurch gekennzeichnet, dass** das Gehäuse (2) einen Umfangsbereich (16) mit mindestens zwei ersten Befestigungsbohrungen (11) umfasst und dass der Deckel (4) einen Umfangsbereich (17) mit mindestens zwei zweiten Befestigungsbohrungen (11) umfasst, so dass die Befestigung des Deckels (4) und des Gehäuses (2) durch Verschrauben mit Hilfe der ersten und zweiten Bohrungen (11) erfolgt, wobei die genannten Umfangsbereiche (16, 17) nicht aneinanderstoßen, wenn der genannte Deckel (4) und das genannte Gehäuse (2) vor dem Verschrauben auf der genannten Zwischenplatte (3) aufliegen, und nach dem Verschrauben aufliegen und zumindest teilweise aneinanderstoßen, so dass die Bewegung der genannten Zwischenplatte (3) eingeschränkt und blockiert wird.

3. Elektrischer Aktuator nach Anspruch 1, **dadurch gekennzeichnet, dass** der Deckel (4) einen Ventilkörper (28) bildet.

4. Elektrischer Aktuator nach Anspruch 1, **dadurch gekennzeichnet, dass** die verschiedenen Führungssitze der Rotorwelle (29) und der Achsen (46a, 46b, 46c) des mechanischen Untersetzungsgetriebes (24) durch das Gehäuse (2), die Zwischenplatte (3) und den Deckel (4) gebildet werden, wobei die Führungssitze Kugellager (23a, 23b, 23c, 23d) oder Gleitlager sind.

5. Elektrischer Aktuator nach Anspruch 1, **dadurch gekennzeichnet, dass** die beiden Zentrierstifte (8a, 8b) und die Zwischenplatte (3) ein einziges Teil bilden.

6. Elektrischer Aktuator nach Anspruch 1, **dadurch gekennzeichnet, dass** das Gehäuse (2) durch Umspritzen mit einem Kunststoffmaterial hergestellt ist und auf einem der Löcher des Paares von Zentrierlöchern zwei koaxiale Zentrierungen aufweist, eine zylindrische (12b), die andere freiliegend (12c).

7. Elektrischer Aktuator nach Anspruch 1, **dadurch gekennzeichnet, dass** das Gehäuse (2) durch Umspritzen mit einem Kunststoffmaterial hergestellt ist und dass es einen in die Umspritzung integrierten Verbinder (19) umfasst.

8. Elektrischer Aktuator nach Anspruch 1, **dadurch gekennzeichnet, dass** die Leiterplatte (22) eine erste Seite (33), die elektronische Bauteile aufnimmt, und eine zweite Seite (34), die frei von Bauteilen ist, aufweist, wobei die erste Seite (33) dem Elektromotor und dem Boden des Gehäuses (2) zugewandt ist, und die zweite Seite (34) der Zwischenplatte (3) zugewandt ist.

9. Elektrischer Aktuator nach dem vorstehenden Anspruch, **dadurch gekennzeichnet, dass** die erste (33) und die zweite (34) Seite der gedruckten Schaltung (22) zumindest teilweise mit einer Wärmeleitpaste bedeckt sind, die ebenfalls zumindest teilweise mit dem Gehäuse bzw. der Zwischenplatte (3) in Kontakt steht.

10. Elektrischer Aktuator nach Anspruch 1, **dadurch gekennzeichnet, dass** der gewickelte Stator (20) Statorzähne (36a, 36b) aufweist, die tangential durch Magnetfeldkollektoren (37) verlängert sind, dass zumindest ein Teil der Zähne (36b) Spulen (38) trägt und auf den Stator (20) aufgesetzt ist und dass die Spulen (38) eine kegelstumpfförmige Form aufweisen.

11. Elektrischer Aktuator nach dem vorstehenden Anspruch, **dadurch gekennzeichnet, dass** jeder Statorzahn (36b), der eine Spule (38) trägt, zusammen mit zwei benachbarten Zähnen (36a) eine W-Form aufweist, wobei die Außenflanken der kegelstumpfförmigen Spule (38) parallel zu den Innenflanken der benachbarten Zähne (36a) sind.

12. Elektrischer Aktuator nach Anspruch 10, **dadurch gekennzeichnet, dass**, D die Anzahl der Statorzähne (36a, 36b) bezeichnet und GAP den tangentialen Abstand zwischen den Feldkollektoren (37) zwischen zwei benachbarten Zähnen (36a) bezeichnet, mit

$$GAP = (360 /(8 \times D)) \pm 5\%$$

13. Elektrischer Aktuator nach Anspruch 10, **dadurch gekennzeichnet, dass** der Rotor (21) einen Magneten (35) aufweist, dass E die radiale Dicke des Magneten (35) bezeichnet)- EP1 die minimale radiale Dicke am Ende des Feldkollektors (37) bezeichnet und EP2 die maximale radiale Dicke an der Geburt des Feldkollektors (37) bezeichnet, mit

$$EP2 \geq 0,75 \times E \text{ und } EP1 < EP2.$$

14. Elektrischer Aktuator nach Anspruch 1, **dadurch gekennzeichnet, dass** der Rotor (21) einen Permanentmagneten (35) umfasst, der teilweise mit einem eingespritzten Kunststoffmaterial umspritzt ist, wobei diese Umspritzung die Rotorwelle (29) teilweise umfasst und eine Ebene (42) bildet, die orthogonal zur Welle (29) verläuft und auf der ein Sensormagnet (41) positioniert ist.

15. Elektrischer Aktuator nach Anspruch 1, **dadurch gekennzeichnet, dass** der Rotor (21) einen Permanentmagneten (35) umfasst, der teilweise mit einem eingespritzten Kunststoffmaterial umspritzt ist, wobei diese Umspritzung die Rotorwelle (29) teilweise umfasst und einen Sensormagneten (41) bildet.

**Claims**

1. Electric actuator (1) comprising

    - a housing (2),
    - an electric motor comprising a wound stator (20) and a rotor (21) mounted on a rotor shaft (29),
    - a printed circuit (22) serving to supply said stator (20) and to control said motor,
    - an intermediate plate (3),
    - a mechanical gearbox (24) driven by said rotor (21) and formed by gear wheels (45a, 45b, 45c) mounted on axes (46a, 46b, 46c),
    - a cover (4),
    - two centring pins (8a, 8b),
    said housing (2) defining a first cavity (15) in which said stator (20) is housed, and comprising means for guiding said rotor shaft (29) on a first end,
    said printed circuit (22) being located in said first cavity (15) above said stator (20),
    said intermediate plate (3) being located above said printed circuit (22),
    said cover (4) defining a second cavity (25) having means for guiding the ends of said axes (46a, 46b, 46c) of said mechanical gearbox (24),
    said cover (4) being located above said intermediate plate (3),
    said intermediate plate (3) serving to guide the other end of said rotor shaft (29), and serving to guide the other ends of said axes (46a, 46b, 46c) of said mechanical gearbox (24),

    **characterised in that**

    • the first cavity (15) of said housing (2) has a first pair of centring holes receiving said two centring pins (8a, 8b),
    • said intermediate plate (3) has a second pair of centring holes receiving said two centring pins (8a, 8b),
    • said cover (4) has a third pair of centring holes receiving said two centring pins (8a, 8b),
    • said intermediate plate (3) is in contact with said housing (2) and said cover (4) on bearing surfaces (13, 14) located around the centring holes,
    • two of said first, second and third pairs of holes are composed of:

        ○ a cylindrical centring device (7a, 9a, 12a) achieving a sliding pivot connection with two degrees of freedom, in translation and rotation according to only one axis
        and
        ○ a clear centring device (7c, 9c, 12c), achieving a straight linear connection with four degrees of freedom, or a connection at one point with 5 degrees of freedom.

    • the other of said first, second and third pairs of holes is comprised of two cylindrical centring devices (7a, 7b, 9a, 9b, 12a, 12b) making a sliding pivot connection with two degrees of freedom, in translation and rotation along only one axis
    • said housing comprising one single sealing gasket (6) positioned at the interface between the housing (2) and the cover (4).

2. Electric actuator according to claim 1, **characterised in that** said housing (2) comprises a peripheral area (16) having at least two first fastening piercings (11) and **in that** said cover (4) comprises a peripheral area (17) having at least two second fastening piercings (11) so that the fastening of said cover (4) and of said housing (2) is carried out by screwing using said first and second piercings (11), said peripheral areas (16, 17) not being contiguous when said cover (4) and said housing (2) are bearing on said intermediate plate (3) before screwing and being bearing and being at least partially contiguous after screwing, so as to constrain and block the movement of said intermediate plate (3).

3. Electric actuator according to claim 1, **characterised in that** the cover (4) forms a valve body (28).

**4.** Electric actuator according to claim 1, **characterised in that** the different guide surfaces of said rotor shaft (29) and of said axes (46a, 46b, 46c) of the mechanical gearbox (24) are made in the housing (2), the intermediate plate (3) and the cover (4), all of said guide surfaces being ball bearings (23a, 23b, 23c, 23d) or plain bearings.

**5.** Electric actuator according to claim 1, **characterised in that** said two centring pins (8a, 8b) and said intermediate plate (3) form one and the same part.

**6.** Electric actuator according to claim 1, **characterised in that** the housing (2) is made by overmoulding a plastic material and has two coaxial centring devices on one of the holes of said pair of centring holes, one being cylindrical (12b), the other being clear (12c).

**7.** Electric actuator according to claim 1, **characterised in that** the housing (2) is made by overmoulding a plastic material and **in that** it comprises a connector (19) integrated into the overmoulding.

**8.** Electric actuator according to claim 1, **characterised in that** the printed circuit (22) has a first face (33) accommodating electronic components and a second (34) free face of components, said first face (33) facing the electric motor and the bottom of the housing (2), said second face (34) facing the intermediate plate (3).

**9.** Electric actuator according to the preceding claim, **characterised in that** the first (33) and second (34) faces of the printed circuit (22) are at least partially covered with a thermal paste also being at least partially in contact with, respectively, the housing and the intermediate plate (3).

**10.** Electric actuator according to claim 1, **characterised in that** the wound stator (20) has stator teeth (36a, 36b) tangentially extended by magnetic field collectors (37), **in that** at least some of said teeth (36b) carry coils (38) and are attached on the stator (20) and **in that** said coils (38) have a frustoconical shape.

**11.** Electric actuator according to the preceding claim **characterised in that** each stator tooth (36b) carrying a coil (38) has, with two adjacent teeth (36a), a W-shape, the outer flanks of the conical coil (38) being parallel to the inner flanks of said adjacent teeth (36a).

**12.** Electric actuator according to claim 10, **characterised in that**, D denotes the number of stator teeth (36a, 36b) and GAP denotes the tangential distance between the field collectors (37) between two adjacent teeth (36a), with

$$GAP = (360/(8xD))\pm5\%$$

**13.** Electric actuator according to claim 10, **characterised in that** said rotor (21) has a magnet (35), **in that** E denotes the radial thickness of said magnet (35)- EP1 denotes the minimum radial thickness at the end of the field collector (37) and EP2 denotes the maximum radial thickness at the origin of the field collector (37), with

$$EP2 \geq 0{,}75xE \text{ and } EP1 < EP2.$$

**14.** Electric actuator according to claim 1, **characterised in that** the rotor (21) comprises a permanent magnet (35) partially overmoulded by an injected plastic material, this overmoulding partially encompassing the rotor shaft (29) and forming a plane (42), orthogonal to the shaft (29), on which a sensor magnet (41) is positioned.

**15.** Electric actuator according to claim 1, **characterised in that** the rotor (21) comprises a permanent magnet (35) partially overmoulded by an injected plastic material, this overmoulding partially encompassing the rotor shaft (29) and forming a sensor magnet (41).

FIGURE 1

## FIGURE 2

FIGURE 3

## FIGURE 4

# FIGURE 5

FIGURE 6

FIGURE 7

12a

8a

7a

9a

3

2

134

133

6

132

131

4

FIGURE 8

FIGURE 9

FIGURE 10

**FIGURE 11**

FIGURE 12

FIGURE 13

FIGURE 14

FIGURE 15

FIGURE 16

FIGURE 17

FIGURE 18

FIGURE 19a

FIGURE 19b

FIGURE 20

FIGURE 21

FIGURE 22

FIGURE 23

FIGURE 24

FIGURE 25

FIGURE 26

FIGURE 27

FIGURE 28

FIGURE 29

FIGURE 30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018088356 A
- US 2018062479 A
- DE 4313782
- WO 2010138455 A
- FR 2919441
- FR 2994353